# EUROPÄISCHE PATENTANMELDUNG

(11) **EP 3 974 712 A1**
(43) Veröffentlichungstag der Anmeldung: **30.03.2022**
(21) Anmeldenummer: 20197840.0
(22) Anmeldetag: 23.09.2020
(51) Int. Cl.: F21S 41/255, F21S 41/265, F21S 41/275, F21S 41/147, F21S 41/32, F21S 41/20, F21S 41/43, F21S 41/663, G02B 3/08

(54) **BELEUCHTUNGSVORRICHTUNG FÜR EINEN KRAFTFAHRZEUGSCHEINWERFER**

(71) Anmelder: ZKW Group GmbH, 3250 Wieselburg (AT)
(72) Erfinder: Mandl, Bernhard, 3200 Obergrafendorf (AT); Hölzl, Andreas, 3250 Wieselburg (AT); Steinkellner, Johann, 3684 St. Oswald (AT); Park, Sunjung, Seoul 08042 (KR)
(74) Vertreter: Patentanwaltskanzlei Matschnig & Forsthuber OG

(57) **Zusammenfassung**

Beleuchtungsvorrichtung (10) für einen Kraftfahrzeugscheinwerfer, welche Folgendes umfasst:
- ein erstes Lichtmodul (100) zur Erzeugung einer Lichtverteilung
- eine Strahlenblende (300) mit einer Strahlenblende (300), welche eine optisch relevante Blendenkante (310) zur Erzeugung einer Hell-Dunkel-Grenze umfasst,
- eine Projektionslinse (400) mit einer optischen Achse (A), welche eingerichtet ist, das von dem ersten Lichtmodul (100) erzeugbare Licht vor der Beleuchtungsvorrichtung (10) abzubilden, wobei die Projektionslinse (400) als Fresnellinse ausgebildet ist, welche Fresnellinse einen Basiskörper (410) und mehrere an dem Basiskörper (410) angeordnete, ringförmige Stufen (420) umfasst, wobei jede Stufe (420) eine Hauptfläche (420a) zur Projektion der Lichtstrahlen des zumindest einen Lichtmoduls (100) vor die Beleuchtungsvorrichtung (10) und eine sich von dem Basiskörper (410) bis zur Hauptfläche (420a) erstreckende Steigungsfläche (420b) aufweist, wobei die Steigungsfläche (420b) einen Steigungswinkel (W2) zur optischen Achse (A) einschließt, und wobei die Hauptfläche (420a) und die Steigungsfläche (420b) in einer gemeinsamen Flächenschnittlinie eine Stufenkante (430) ausbilden, wobei der Steigungswinkel (W2) entlang des Umfangs einer Stufenkante (430) kontinuierlich variiert.

## Beschreibung

Die Erfindung betrifft eine Beleuchtungsvorrichtung für einen Kraftfahrzeugscheinwerfer, welche Beleuchtungsvorrichtung Folgendes umfasst:
- zumindest ein erstes Lichtmodul zur Erzeugung einer Lichtverteilung mit zumindest einer ersten und einer zweiten Lichtquelle, wobei die erste Lichtquelle eingerichtet ist, Licht in eine erste Abstrahlrichtung zu emittieren, und wobei die zweite Lichtquelle eingerichtet ist, Licht in eine zweite Abstrahlrichtung zu emittieren, wobei die erste und die zweite Abstrahlrichtung einen Winkel größer Null Grad zueinander einschließen,
- eine Strahlenblende, wobei die Strahlenblende eine optisch relevante Blendenkante zur Erzeugung einer Hell-Dunkel-Grenze umfasst, wobei das erste Lichtmodul an einer Oberseite der Strahlenblende angeordnet ist und in Kombination mit der optisch relevanten Blendenkante der Strahlenblende zur Erzeugung einer Lichtverteilung mitwirkt,
- eine Projektionslinse mit einer optischen Achse, welche eingerichtet ist, das von dem ersten Lichtmodul erzeugbare Licht vor der Beleuchtungsvorrichtung abzubilden, wobei die Projektionslinse als Fresnellinse ausgebildet ist, welche Fresnellinse einen Basiskörper und mehrere an dem Basiskörper angeordnete, ringförmige Stufen umfasst, welche Stufen im Wesentlichen konzentrisch zueinander angeordnet sind, wobei jede Stufe eine Hauptfläche zur Projektion der Lichtstrahlen des zumindest einen Lichtmoduls vor die Beleuchtungsvorrichtung und eine sich von dem Basiskörper bis zur Hauptfläche erstreckende Steigungsfläche aufweist, wobei die Steigungsfläche einen Steigungswinkel zur optischen Achse einschließt, und wobei die Hauptfläche und die Steigungsfläche in einer gemeinsamen Flächenschnittlinie eine Stufenkante ausbilden.

Weiters betrifft die Erfindung einen Kraftfahrzeugscheinwerfer mit zumindest einer erfindungsgemäßen Beleuchtungsvorrichtung.

Eine Fresnellinse (genauer: Fresnel'sche Stufenlinse) ist eine optische Linse, die die Konstruktion großer Linsen mit kurzer Brennweite ohne das Gewicht und das Volumen herkömmlicher Linsen ermöglicht.

Die Verringerung des Volumens geschieht bei der Fresnellinse durch eine Aufteilung in ringförmige Bereiche. In jedem dieser Bereiche wird die Dicke verringert, so dass die Linse eine Reihe ringförmiger Stufen erhält. Da Licht nur an der Hauptfläche der Linse gebrochen wird, ist der Brechungswinkel nicht von der Dicke, sondern nur vom Winkel zwischen den beiden Oberflächen einer Linse abhängig. Deshalb behält die Linse ihre optischen Eigenschaften bei, obwohl die Bildqualität durch die Stufenstruktur beeinträchtigt wird, was aber in vielen Anwendungsfällen keine Rolle spielt. Beispiele hierfür sind Beleuchtungs-Strahlengänge bei Scheinwerfern aller Art.

Jedoch kann die Steigungsfläche jeder Stufe zu einem unerwünschten Streulicht führen, was für viele Anwendungen, insbesondere im Kraftfahrzeugscheinwerferbereich, bei welchem genaue gesetzliche Rahmenbedingungen erfüllt werden müssen, zu Problemen führen kann.

Es ist eine Aufgabe der Erfindung eine verbesserte Beleuchtungsvorrichtung bereitzustellen.

Diese Aufgabe wird dadurch gelöst, dass der Steigungswinkel entlang des ringförmigen Umfangs einer Stufenkante kontinuierlich variiert.

Es kann vorgesehen sein, dass die erste und die zweite Lichtquelle bei einem eingebauten Zustand der Beleuchtungsvorrichtung in einem Kraftfahrzeugscheinwerfer in einer Horizontalebene angeordnet sind.

Es kann vorgesehen sein, dass die Strahlenblende eine Längsachse aufweist, wobei die Längsachse der Strahlenblende bei einem eingebauten Zustand der Beleuchtungsvorrichtung in einem Kraftfahrzeugscheinwerfer in einer Horizontalebene angeordnet ist, wobei die Strahlenblende eine optisch relevante Blendenkante zur Erzeugung einer asymmetrischen Hell-Dunkel-Grenze umfasst, wobei das erste Lichtmodul an einer Oberseite der Strahlenblende angeordnet ist und in Kombination mit der optisch relevanten Blendenkante der Strahlenblende zur Erzeugung einer Abblendlichtverteilung mitwirkt.

Es kann vorgesehen sein, dass der Steigungswinkel entlang des ringförmigen Umfangs einer Stufenkante derart kontinuierlich variiert, dass eine Änderung des Steigungswinkels einem sinusförmigen Verlauf folgt, wobei der Steigungswinkel jeder Stufe entlang einer vertikalen Achse, welche die optische Achse der Fresnellinse schneidet, ein Maximum der jeweiligen Stufe aufweist, und wobei der Steigungswinkel jeder Stufe entlang einer horizontalen Achse, welche die optische Achse der Fresnellinse schneidet, ein Minimum der jeweiligen Stufe aufweist.

Es hat sich überaschenderweise gezeigt, dass ein in vertikaler Richtung größerer Steigungswinkel als in horizontaler Richtung das Streulicht in der projizierten Lichtverteilung deutlich reduziert.

Generell beziehen sich im Weiteren die Begriffe hinsichtlich eines Ortes oder einer Orientierung, wie beispielsweise "horizontal", "vertikal", "in horizontaler Richtung", "in vertikaler Richtung", "oben", "unten", "vorne", "hinten", "darunter", "darüber" etc. auf eine ordnungsgemäße Einbaulage der gegenständlichen Beleuchtungsvorrichtung in einem Kraftfahrzeugscheinwerfer.

Es kann vorgesehen sein, dass das Maximum des Steigungswinkels der Stufen ausgehend von der optischen Achse in vertikaler Richtung zunimmt.

Es kann vorgesehen sein, dass das Minimum des Steigungswinkels der Stufen ausgehend von der optischen Achse in horizontaler Richtung zunimmt.

Es kann vorgesehen sein, dass die Beleuchtungsvorrichtung zumindest ein zweites Lichtmodul mit zumindest einer Lichtquelle zur Erzeugung einer Fernlichtverteilung umfasst.

Es kann vorgesehen sein, dass das zweite Lichtmodul an einer Unterseite der Strahlenblende angeordnet ist und zur Erzeugung einer Fernlichtverteilung mitwirkt.

Es kann vorgesehen sein, dass das Minimum des Steigungswinkels entlang der horizontalen Achse 1 bis 3 Grad ist.

Es kann vorgesehen sein, dass das Maximum des Steigungswinkels entlang der vertikalen Achse 3 bis 12 Grad, vorzugsweise 3 bis 6 Grad, insbesondere 6 Grad ist.

Die Aufgabe wird ebenso durch einen Kraftfahrzeugscheinwerfer mit zumindest einer erfindungsgemäßen Beleuchtungsvorrichtung gelöst.

Nachfolgend wird die Erfindung anhand von beispielhaften Zeichnungen näher erläutert. Hierbei zeigt
Fig. 1 eine beispielhafte Beleuchtungsvorrichtung in einem vertikalen Querschnitt, mit einem ersten und einem zweiten Lichtmodul und einer als Fresnellinse ausgebildeten Projektionslinse, wobei die Fresnellinse einen Basiskörper mit mehreren ringförmig angeordneten Stufen aufweist,
Fig. 2 die beispielhafte Beleuchtungsvorrichtung aus Fig. 1 in einem horizontalen Querschnitt,
Fig. 3 eine Detailansicht einer Stufe in einem Querschnitt, und
Fig. 4 die Stirnseite der Fresnellinse.

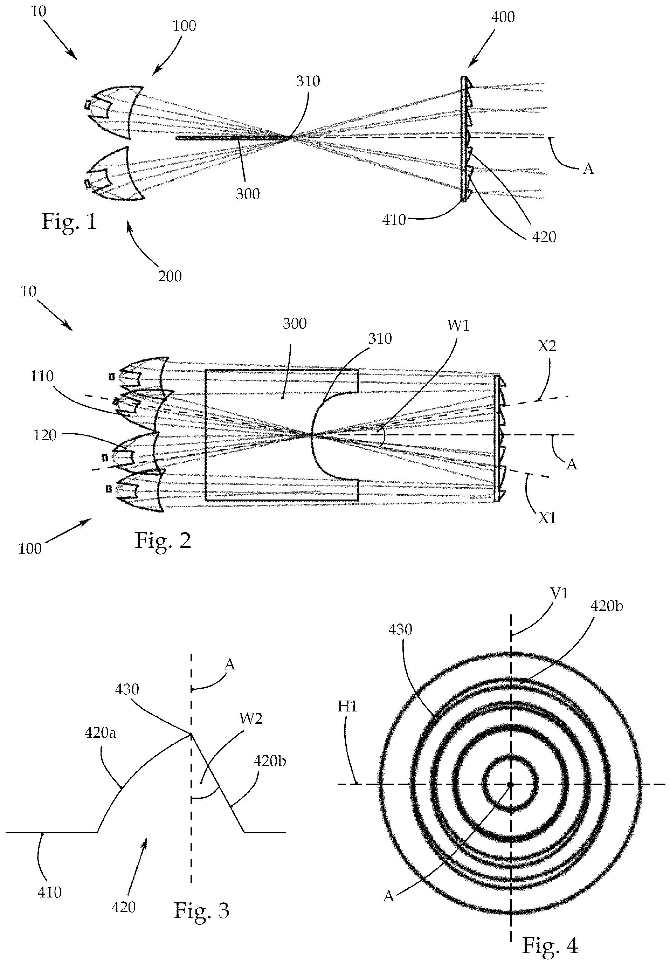

**Fig. 1** zeigt eine beispielhafte Beleuchtungsvorrichtung **10** für einen Kraftfahrzeugscheinwerfer, welche Beleuchtungsvorrichtung **10** ein erstes Lichtmodul **100** zur Erzeugung einer Abblendlichtverteilung mit zumindest einer ersten und einer zweiten Lichtquelle **110**, **120** umfasst, wobei die erste und die zweite Lichtquelle **110**, **120** bei einem eingebauten Zustand der Beleuchtungsvorrichtung **10** in einem Kraftfahrzeugscheinwerfer in einer Horizontalebene angeordnet sind, wie in **Fig. 2** zu sehen ist.

Die erste Lichtquelle **110** ist eingerichtet, Licht in eine erste Abstrahlrichtung **X1** zu emittieren, wobei die zweite Lichtquelle **120** eingerichtet ist, Licht in eine zweite Abstrahlrichtung **X2** zu emittieren, wobei die erste und die zweite Abstrahlrichtung **X1, X2** einen Winkel **W1** größer Null Grad zueinander einschließen, wie ebenfalls in **Fig. 2** deutlich zu sehen ist.

Ferner umfasst die Beleuchtungsvorrichtung **10** ein zweites Lichtmodul **200** mit zumindest einer Lichtquelle zur Erzeugung einer Fernlichtverteilung.

Darüber hinaus umfasst die Beleuchtungsvorrichtung eine Strahlenblende **300** mit einer Längsachse, wobei die Längsachse der Strahlenblende **300** bei einem eingebauten Zustand der Beleuchtungsvorrichtung **10** in einem Kraftfahrzeugscheinwerfer in einer Horizontalebene angeordnet ist, wobei die Strahlenblende **300** eine optisch relevante Blendenkante **310** zur Erzeugung einer asymmetrischen Hell-Dunkel-Grenze umfasst, wobei das erste Lichtmodul **100** an einer Oberseite der Strahlenblende **300** angeordnet ist und in Kombination mit der optisch relevanten Blendenkante **310** der Strahlenblende zur Erzeugung einer Abblendlichtverteilung mitwirkt.

Das zweite Lichtmodul **200** ist an einer Unterseite der Strahlenblende **300** angeordnet und ist eingerichtet zur Erzeugung einer Fernlichtverteilung mitzuwirken.

Ferner umfasst die Beleuchtungsvorrichtung **10** eine Projektionslinse **400** mit einer optischen Achse **A**, welche eingerichtet ist, das von dem ersten Lichtmodul **100** erzeugbare Licht vor der Beleuchtungsvorrichtung **10** abzubilden, wobei die Projektionslinse **400** als Fresnellinse ausgebildet ist, welche Fresnellinse einen Basiskörper **410** und mehrere an dem Basiskörper **410** angeordnete, ringförmige Stufen **420** umfasst, welche Stufen **420** im Wesentlichen konzentrisch zueinander angeordnet sind, wie unter anderem in **Fig. 4** zu sehen ist.

Jede Stufe **420** weist dabei eine Hauptfläche **420a** zur Projektion der Lichtstrahlen des zumindest einen Lichtmoduls **100** vor die Beleuchtungsvorrichtung **10** und eine sich von dem Basiskörper **410** bis zur Hauptfläche **420a** erstreckende Steigungsfläche **420b** auf, wobei die Steigungsfläche **420b** einen Steigungswinkel **W2** zur optischen Achse **A** einschließt, und wobei die Hauptfläche **420a** und die Steigungsfläche **420b** in einer gemeinsamen Flächenschnittlinie eine Stufenkante **430** ausbilden, wie detailliert in **Fig. 3** zu sehen ist. Die in **Fig. 3** eingezeichnete optische Achse **A** ist hierbei eine zur optischen Achse der Fresnellinse parallel Achse und soll die Bildung des Steigungswinkels **W2** verdeutlichen.

Der Steigungswinkel **W2** variiert entlang des ringförmigen Umfangs einer Stufenkante **430** derart kontinuierlich, dass eine Änderung des Steigungswinkels **W2** einem sinusförmigen Verlauf folgt, wobei der Steigungswinkel **W2** jeder Stufe entlang einer vertikalen Achse **V1**, welche die optische Achse **A** der Fresnellinse schneidet, ein Maximum der jeweiligen Stufe aufweist, und wobei der Steigungswinkel **W2** jeder Stufe entlang einer horizontalen Achse **H1**, welche die optische Achse **A** der Fresnellinse schneidet, ein Minimum der jeweiligen Stufe aufweist, wie deutlicher in **Fig. 4** zu sehen ist.

Wenn man beispielsweise startend von der horizontalen Achse **H1** dem ringförmigen Verlauf bzw. Umfang der Stufenkante **430** einer Stufe **420** entlang im Uhrzeigersinn umläuft (ausgehend von **Fig. 4****,** welche eine Stirnseite der Fresnellinse zeigt), so ist der Steigungswinkel **W2** direkt an der horizontalen Achse **H1** bei einem Minimum, wobei der Steigungswinkel in weiterer Folge stetig bzw. kontinuierlich zu nimmt, bis der Steigungswinkel der entsprechenden Stufe bei der vertikalen Achse **V1** ein Maximum aufweist. Folgt man dem Umfang der Stufe weiter, so nimmt der Steigungswinkel **W2** wieder ab, bis er - wieder angelangt an der horizontalen Achse **H1 -** ein weiteres Minimum aufweist. Anschließend nimmt der Steigungswinkel **W2** wieder ab, bis er - wieder angelangt an der vertikalen Achse **V1 -** ein weiteres Maximum aufweist.

Ferner nimmt das Maximum des Steigungswinkels **W2** der Stufen ausgehend von der optischen Achse **A** in vertikaler Richtung zu, d.h. dass ausgehend von einer Stufe die unmittelbar nächste Stufe, welche einen größeren ringförmigen Umfang der Stufenkante aufweist, auch einen größeren maximalen Steigungswinkel **W2** aufweist. Dies setzt sich in vertikaler Richtung bzw. entlang der vertikalen Achse **V1** fort. Das Maximum des Steigungswinkels W2 entlang der vertikalen Achse kann dabei von 3 bis 10 Grad, vorzugsweise von 3 bis 6 Grad, variieren.

Weiters nimmt das Minimum des Steigungswinkels **W2** der Stufen ausgehend von der optischen Achse **A** in horizontaler Richtung zu, wobei das im vorigen Absatz gesagte vice versa für den Verlauf des Minimums in horizontaler Richtung gilt. Das Minimum des Steigungswinkels **W2** entlang der horizontalen Achse **H1** kann dabei von 1 bis 3 Grad variieren.

## Patentansprüche

1. Beleuchtungsvorrichtung (10) für einen Kraftfahrzeugscheinwerfer, welche Beleuchtungsvorrichtung (10) Folgendes umfasst:
- zumindest ein erstes Lichtmodul (100) zur Erzeugung einer Lichtverteilung mit zumindest einer ersten und einer zweiten Lichtquelle (110, 120), wobei die erste Lichtquelle (110) eingerichtet ist, Licht in eine erste Abstrahlrichtung (X1) zu emittieren, und wobei die zweite Lichtquelle (120) eingerichtet ist, Licht in eine zweite Abstrahlrichtung (X2) zu emittieren, wobei die erste und die zweite Abstrahlrichtung (X1, X2) einen Winkel (W1) größer Null Grad zueinander einschließen,
- eine Strahlenblende (300), wobei die Strahlenblende (300) eine optisch relevante Blendenkante (310) zur Erzeugung einer Hell-Dunkel-Grenze umfasst, wobei das erste Lichtmodul (100) an einer Oberseite der Strahlenblende (300) angeordnet ist und in Kombination mit der optisch relevanten Blendenkante (310) der Strahlenblende zur Erzeugung einer Lichtverteilung mitwirkt,
- eine Projektionslinse (400) mit einer optischen Achse (A), welche eingerichtet ist, das von dem ersten Lichtmodul (100) erzeugbare Licht vor der Beleuchtungsvorrichtung (10) abzubilden, wobei die Projektionslinse (400) als Fresnellinse ausgebildet ist, welche Fresnellinse einen Basiskörper (410) und mehrere an dem Basiskörper (410) angeordnete, ringförmige Stufen (420) umfasst, welche Stufen (420) im Wesentlichen konzentrisch zueinander angeordnet sind, wobei jede Stufe (420) eine Hauptfläche (420a) zur Projektion der Lichtstrahlen des zumindest einen Lichtmoduls (100) vor die Beleuchtungsvorrichtung (10) und eine sich von dem Basiskörper (410) bis zur Hauptfläche (420a) erstreckende Steigungsfläche (420b) aufweist, wobei die Steigungsfläche (420b) einen Steigungswinkel (W2) zur optischen Achse (A) einschließt, und wobei die Hauptfläche (420a) und die Steigungsfläche (420b) in einer gemeinsamen Flächenschnittlinie eine Stufenkante (430) ausbilden,
**dadurch gekennzeichnet, dass**
der Steigungswinkel (W2) entlang des ringförmigen Umfangs einer Stufenkante (430) kontinuierlich variiert.

2. Beleuchtungsvorrichtung nach Anspruch 1, **dadurch gekennzeichnet, dass** die erste und die zweite Lichtquelle (110, 120) bei einem eingebauten Zustand der Beleuchtungsvorrichtung (10) in einem Kraftfahrzeugscheinwerfer in einer Horizontalebene angeordnet sind.

3. Beleuchtungsvorrichtung nach Anspruch 1 oder 2, **dadurch gekennzeichnet, dass** die Strahlenblende eine Längsachse aufweist, wobei die Längsachse der Strahlenblende (300) bei einem eingebauten Zustand der Beleuchtungsvorrichtung (10) in einem Kraftfahrzeugscheinwerfer in einer Horizontalebene angeordnet ist, wobei die Strahlenblende (300) eine optisch relevante Blendenkante (310) zur Erzeugung einer asymmetrischen Hell-Dunkel-Grenze umfasst, wobei das erste Lichtmodul (100) an einer Oberseite der Strahlenblende (300) angeordnet ist und in Kombination mit der optisch relevanten Blendenkante (310) der Strahlenblende zur Erzeugung einer Abblendlichtverteilung mitwirkt.

4. Beleuchtungsvorrichtung nach einem der Ansprüche 1 bis 3, **dadurch gekennzeichnet, dass** der Steigungswinkel (W2) entlang des ringförmigen Umfangs einer Stufenkante (430) derart kontinuierlich variiert, dass eine Änderung des Steigungswinkels (W2) einem sinusförmigen Verlauf folgt, wobei der Steigungswinkel (W2) jeder Stufe entlang einer vertikalen Achse (V1), welche die optische Achse (A) der Fresnellinse schneidet, ein Maximum der jeweiligen Stufe aufweist, und wobei der Steigungswinkel (W2) jeder Stufe entlang einer horizontalen Achse (H1), welche die optische Achse (A) der Fresnellinse schneidet, ein Minimum der jeweiligen Stufe aufweist.

5. Beleuchtungsvorrichtung nach einem der Ansprüche 1 bis 4, **dadurch gekennzeichnet, dass** das Maximum des Steigungswinkels (W2) der Stufen ausgehend von der optischen Achse (A) in vertikaler Richtung zunimmt.

6. Beleuchtungsvorrichtung nach einem der Ansprüche 1 bis 5, **dadurch gekennzeichnet, dass** das Minimum des Steigungswinkels (W2) der Stufen ausgehend von der optischen Achse (A) in horizontaler Richtung zunimmt.

7. Beleuchtungsvorrichtung nach einem der Ansprüche 1 bis 6, **dadurch gekennzeichnet, dass** die Beleuchtungsvorrichtung (10) zumindest ein zweites Lichtmodul (200) mit zumindest einer Lichtquelle zur Erzeugung einer Fernlichtverteilung umfasst.

8. Beleuchtungsvorrichtung nach Anspruch 7, **dadurch gekennzeichnet, dass** das zweite Lichtmodul (200) an einer Unterseite der Strahlenblende (300) angeordnet ist und zur Erzeugung einer Fernlichtverteilung mitwirkt.

9. Beleuchtungsvorrichtung nach einem der Ansprüche 1 bis 8, **dadurch gekennzeichnet, dass** das Minimum des Steigungswinkels (W2) entlang der horizontalen Achse (H1) 1 bis 12 Grad ist.

10. Beleuchtungsvorrichtung nach einem der Ansprüche 1 bis 9, **dadurch gekennzeichnet, dass** das Maximum des Steigungswinkels (W2) entlang der vertikalen Achse 3 bis 12 Grad, vorzugsweise 3 bis 6 Grad, insbesondere 6 Grad ist.

11. Kraftfahrzeugscheinwerfer mit zumindest einer Beleuchtungsvorrichtung (10) gemäß einem der Ansprüche 1 bis 10.
